# EUROPEAN PATENT SPECIFICATION

(11) **EP 2 728 955 B1**
(45) Date of publication and mention of the grant of the patent: **08.04.2015**
(21) Application number: 12191277.8
(22) Date of filing: 05.11.2012
(51) Int. Cl.: H04W 72/04, H04W 40/10

(54) **Communications path selection in wireless communications systems**
Kommunikationspfadauswahl in drahtlosen Kommunikationssystemen
Sélection de trajet de communication dans des systèmes de communication sans fil

(43) Date of publication of application: 07.05.2014
(73) Proprietor: FUJITSU LIMITED, Kawasaki-shi, Kanagawa 211-8588 (JP)
(72) Inventor: Webb, Matthew, Hayes, Middlesex UB4 8FE (GB); Moulsley, Timothy, Caterham, Surrey CXR3 5EE (GB); Hunukumbure, Rajaguru Mudiyanselage Mythri, Hillingdon, Middlesex UB8 3WF (GB); Vadgama, Sunil Keshavji, Ashford, Middlesex TW15 3RD (GB)
(74) Representative: Schultes, Stephan

(56) References cited:
- EP-A1- 2 048 908
- WO-A1-2012/087184
- US-A1- 2006 153 081
- US-A1- 2011 051 642
- INTEL: "Operator Managed and Operator Assisted D2D", 3GPP DRAFT; S1-120063-MANAGED OR ASSISTED D2D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Kyoto, Japan; 20120213 - 20120217, 6 February 2012 (2012-02-06), XP050574728, [retrieved on 2012-02-06]

## Description

### Field

Embodiments described herein generally relate to wireless communication systems, and in particular to communications path selection in such systems based on estimated metrics of energy efficiency associated with the communications path.

### Background

Radio access systems based on the deployment of fixed infrastructure are well known. Exemplary systems include cellular communications systems compliant with the 3GPP Long Term Evolution (LTE) standard and wireless communications systems based on the IEEE 802.11 Wi-Fi standard. Such systems typically comprise an infrastructure node and terminal nodes (or simply "terminals") that may move around within the coverage area served by the infrastructure node. In 3GPP LTE, infrastructure nodes are referred to as eNodeBs (eNBs) and terminal nodes are referred to as user equipments (UEs). The infrastructure nodes of Wi-Fi systems are referred to as access points (APs) and terminal nodes are referred to as subscriber stations (SSs). Other examples of radio access systems will be readily apparent, and no loss of generality is assumed.

In situations where a proportion of the communications is between terminal nodes connected to the same (or nearby) infrastructure node(s) of a system, it may be wasteful, in energy terms, to conduct the communications via the infrastructure node(s). Accordingly, there is a need for improved methods and systems for managing communications that take energy considerations into account.

EP2048908 describes a method of operating a communications network, the method comprising the steps of: a) establishing a first communications session between a first mobile terminal and a base station, the first communications session being performed using a first wireless communications interface; and b) establishing i) a second communications session between the base station and a second mobile terminal, the second communications session being performed using a second wireless communications interface; ii) a third communications session between the first mobile terminal and the second mobile terminal, the third communications session being performed using a third wireless communications interface; wherein the third wireless communications interface consumes less power from the first mobile terminal than the second wireless communications interface.

### Summary

Embodiments are directed to systems and methods for selecting energy-efficient communications paths for communication between terminals, where the plurality of communications paths include direct wireless communications path (also referred to herein as a device-to-device link or "D2D" link, without implication of uplink or downlink) and indirect wireless communications paths comprising communications links from two terminals via at least a base station (also referred to herein as device-to-infrastructure links or "D2I" links, without implication of uplink or downlink). Embodiments provide for intelligent negotiation between the terminals and the base station, as to whether D2D links provide suitable energy efficiency benefits. Some embodiments allow for fine control over which aspects of the communication between the terminals are to be conducted using D2I and/or D2D links. Some embodiments enable the interworking of multiple radio access technologies (RATs) supported by an apparatus based on their respective energy efficiencies, rather than on the basis of more familiar methods such as capacity, reliability or coverage.

In accordance with an aspect of the invention, there is provided a method of managing communications in a wireless communications system according to claim 1.

The energy efficiency of the system may therefore be improved by selecting a more efficient communications path, for example offloading suitable communications from a less efficient indirect link to a more efficient (possibly temporary) direct link between two apparatuses. The base station suggests suitable pairings to the terminals and arbitrates amongst the preferences of the individual terminals. This enables the system to achieve an energy efficient configuration.

Metrics may be estimated by the terminals, for example at least one metric of energy efficiency estimated by a first terminal and at least one metric of energy efficiency estimated by a second terminal.

A wireless communications system can comprise many individual channels, such as control and data channels, which have different data rates, error tolerances and detailed transmission mechanisms. Energy efficiency metrics may be considerably different when the system is considered in its component parts compared to when the system is considered as a whole. Thus, energy efficiency metrics can be separately estimated for each direction of the communications links, for control and data communications, and/or for different radio resources.

In one embodiment, communication carried out over the direct wireless communications path may utilise a different radio access technology from communication carried out over the indirect wireless communications path. Energy efficiency metrics may also consider energy used in transmission, reception, or both.

In one embodiment, when communications are being carried out over direct wireless communications paths, the method further comprises switching communications to indirect wireless communications paths.

In accordance with another aspect of the invention, there is provided a base station for use in a wireless communications system according to claim 6.

In accordance with another aspect of the invention, there is provided a wireless communications system comprising a plurality of terminals and the aforementioned base station.

Any of the various illustrative logical blocks, modules, processors, means, circuits, and algorithm steps described in connection with the aspects disclosed herein may be implemented as hardware, software, or combinations of both, and may include a general purpose processor, a digital signal processor (DSP), an application specific integrated circuit (ASIC), a field programmable gate array (FPGA) or other programmable logic device, discrete gate or transistor logic, discrete hardware components, electrical components optical components, mechanical components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Accordingly, the aforementioned method may be performed when a computer-readable medium carrying computer-readable code is executed by a suitable computer. Computer-readable media may comprise non-transitory computer-readable storage media or communication media. Non-transitory computer-readable media include all computer-readable media except for a transitory, propagating signal. Computer storage media include random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information and that can accessed to retrieve that information. Communication media includes wired media such as a wired network or direct-wired connection, and wireless media such as acoustic, radio frequency (RF), infrared and other wireless media.

### Brief description of drawings

Reference is made, by way of example only, to the accompanying drawings in which:
Figure 1 is a schematic drawing of a radio communication system to which an embodiment of the present invention may be applied;
Figure 2 is a flowchart outlining a method embodying the invention;
Figure 3 is a flowchart of a negotiable, pairwise D2D link selection process according to an embodiment;
Figure 4 is a flowchart of a multi-link, negotiable, pairwise D2D link selection process according to an embodiment;
Figure 5 is a flowchart of a negotiable, per-terminal D2D link selection process according to an embodiment;
Figure 6 is a flowchart of a terminal-requested D2D link selection process according to an embodiment;
Figure 7 is a schematic diagram of an apparatus according to an embodiment; and
Figure 8 is a schematic diagram of another apparatus according to an embodiment

### Detailed description

For convenience, embodiments will be described with reference to "terminals", "infrastructure nodes" (or "system infrastructure"), "D2D links" and "D2I links", and in the context of a system where the default is for terminals to use a D2I link, with the possibility of using a D2D link between a pair of terminals should an energy efficiency criterion or criteria be satisfied with respect to that D2D link. However, it will be understood that this is without loss of generality. Here, a D2D link is a wireless communications link, representing a direct path of communication between two communicating terminals, whereas a D2I link comprises a wireless communications link between a terminal and an infrastructure node (such as an associated base station or an associated access point) and is part of a logical communications link (including other wireless and/or wired portions) representing an indirect path of communication between two communicating terminals. In general, however, the two types of links may be any alternative communications links a terminal can access and for which an energy efficiency metric can be computed.

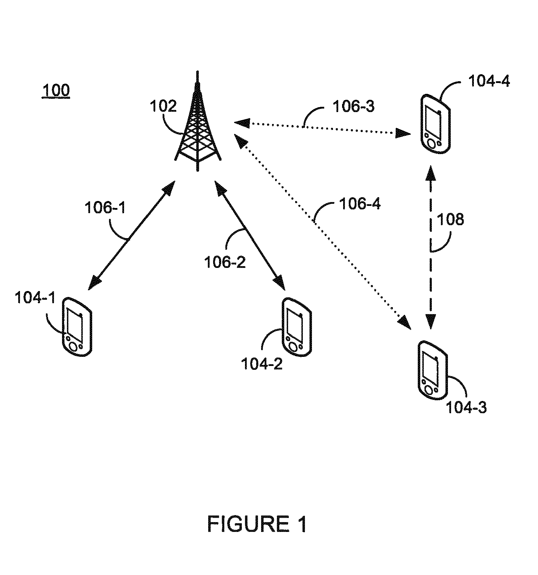

Figure 1 illustrates a system to which embodiments may be applied, and some of the different links that may exist in the system.

The system 100 is an infrastructure-based wireless communications system. As shown, four terminals 104-1, 104-2, 104-4 and 104-4 are located in the coverage area of infrastructure node 102, such as a base station. As shown, terminals 104-1 and 104-2 are communicating with each other indirectly, via infrastructure node 102, using D21 links 106-1, 106-2. Terminals 104-3 and 104-4 are communicating with each other directly using D2D link 108. Also shown are D2I links 106-3, 106-4 that are available to, but currently not in use by, terminals 104-4, 104-3, respectively.

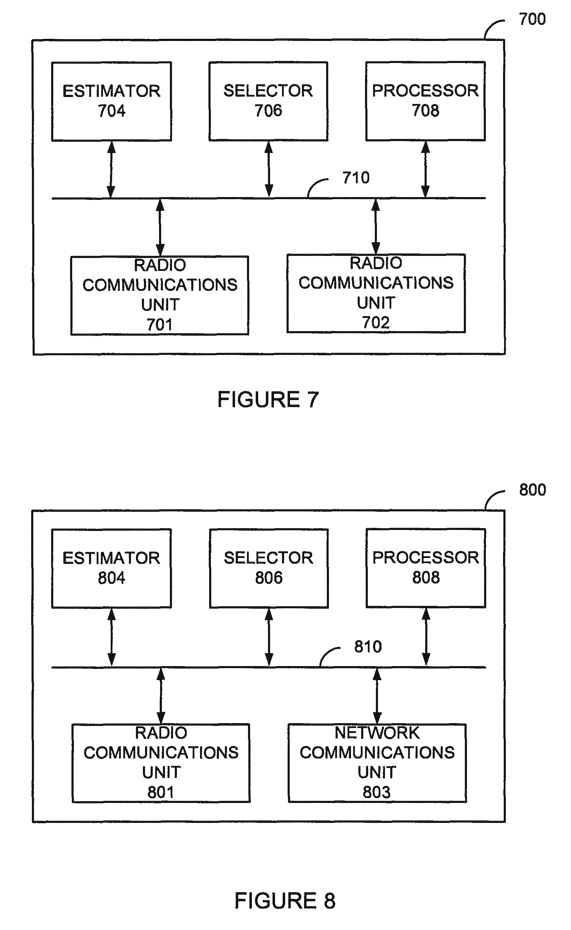

Block diagrams of apparatuses suitable for use in system 100 are shown in Figures 7 and 8, which show only elements relevant to the description of the invention. Here, the apparatus of Figure 7 embodies a terminal, while the apparatus of Figure 8 embodies an infrastructure node such as a base station.

Apparatus 700 includes radio communications units 701, 702, estimator 704, selector 706, and processor 708, each communicatively coupled to a communications bus 710. Each of the radio communications units 701, 702 includes transmitter circuitry and receiver circuitry (not shown) for transmitting and receiving radio communications, respectively. Radio communications unit 701 is for communicating with other apparatuses using a radio access technology different from a radio access technology used by radio communications unit 702. One or both radio access technologies may be supported by the system 100. One or both radio access technologies may variously be supported by other apparatuses of the system 100. It will be appreciated that alternatively only a single radio communications unit may be provided, which may be a dynamically reconfigurable radio communications unit so that multiple radio access technologies may be employed. The selector 706 is for selecting a communications path, based at least on a metric of energy efficiency estimated by estimator 708, as will be described below. In some embodiments, one or both of these functions may be carried out by processor 710. Generally, a terminal may comprise, or be implemented as, a mobile (portable) terminal or a stationary terminal, such as a personal computer (PC), a laptop, a personal digital assistant (PDA), a mobile telephone, and so on. Apparatus 800 includes a radio communications unit 801, a network communications unit 803, estimator 804, selector 806, and processor 808, each communicatively coupled to a communications bus 810. Radio communications unit includes transmitter circuitry and receiver circuitry for transmitting and receiving radio communications, respectively, using a radio access technology supported by the system 100. Infrastructure communications unit 803 is for communicating with other infrastructure nodes of the system 100, and may be a wired communications protocol. The selector 806 is for selecting a communications path, based at least on a metric of energy efficiency estimated by estimator 808, as will be described below. In some embodiments, one or both of these functions may be carried out by processor 810.

Returning to Figure 1, the system 100 could be a cellular system compliant with the 3GPP LTE standard and supporting D2I links over LTE, in which the infrastructure node 102 is an eNB and the terminals 104 are LTE UEs capable of supporting D2D communications over LTE. Similarly, system 100 could be based on a non-cellular technology such as a wireless communications system based on the IEEE 802.11 Wi-Fi standard, in which the infrastructure node 102 is an AP and the terminals 104 are Wi-Fi enabled SSs. Of course, other cellular systems, such as the Universal Mobile Telecommunications System (UMTS), as well as other technologies, such as Wireless Interoperability for Microwave Access (WiMAX), are equally suitable.

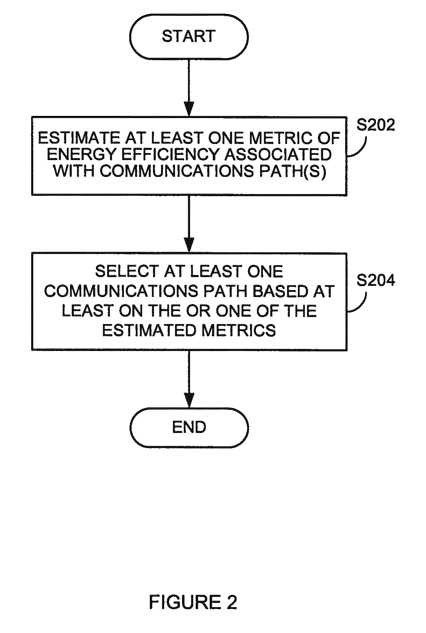

Figure 2 is a flowchart outlining a method embodying the invention.

The process begins at step S202, with an estimation of at least one metric of energy efficiency associated with one or more communications paths. By way of example, the energy efficiency metric could be the energy consumption per transmitted bit in an uplink and/or the energy consumption per received bit in a downlink. The metric could be calculated at the system infrastructure side or at the terminal side, in the latter case being transmitted to the system infrastructure by the terminals if necessary. Energy efficiencies can be estimated for a communications path that is available but currently not in use and/or a communications link that is available and currently in use. At step S204, a communication path is selected. For example, the energy efficiency for communicating over a D2D link may be better than that for communicating over two D2I links owing to, for example, the proximity of the terminals to each other, which results in a lower transmit power to achieve the same data rate. The overall energy efficiency of the system can therefore be improved if some traffic is offloaded to a D2D link, thereby allowing reduced control channel signalling from the system infrastructure.

Specific embodiments will now be described, with the following points borne in mind by the reader. For convenience, reference is made to establishing D2D links between a pair of terminals, but it should be understood that a terminal may communicate, or consider communicating, with any number of terminals simultaneously. For example, referring again to Figure 1, terminal 104-3 may communicate simultaneously with both terminal 104-4 and terminal 104-2. Furthermore, D2D links can, in general, be any communication link that two terminals can establish using a suitable communications technology, irrespective of whether or not that communications technology is supported by the system infrastructure, for example wireless personal area networks such as IEEE 802.15. Where embodiments refer to one link or an alternative link, there may be any number of alternative links available from among which one or more is selected according to the relevant embodiment. In general, the D2I and D2D links need not be provided by the same wireless access technology. For example, whilst the D2I link might be LTE, the D2D link could be WiFi or Bluetooth, with the energy efficiency metrics calculated suitably per technology. The invention is not restricted to terminal located in the same cell (e.g., served by the same eNB in LTE), or served by the same infrastructural node (e.g. the same AP in Wi-Fi). Thus, the indirect communications path may include wired communication links for example between infrastructure nodes.

### Negotiable, pairwise D2D link selection

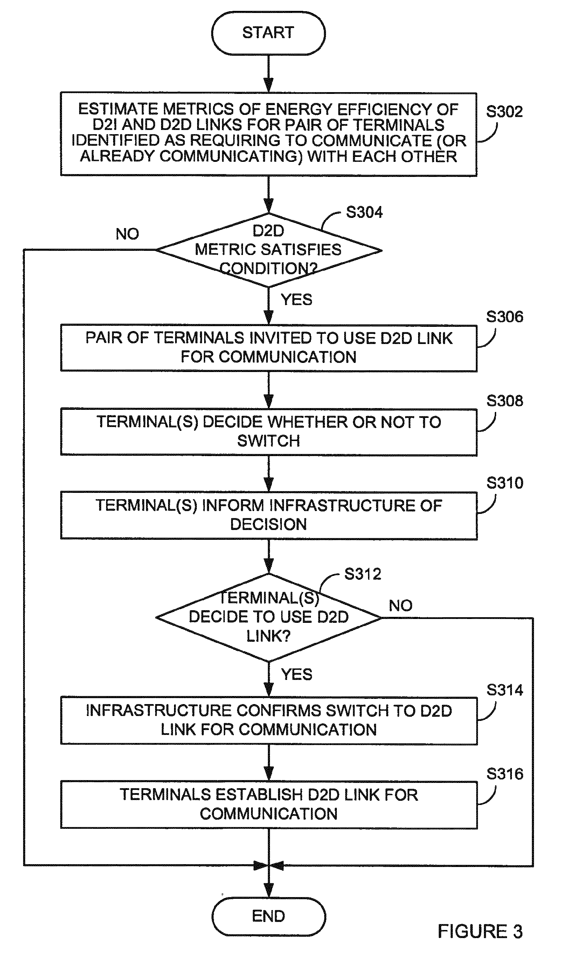

Figure 3 is a flowchart of a negotiable, pairwise D2D link selection process according to an embodiment.

For purposes of explanation but not limitation, it is assumed that a pair of terminals of an infrastructure-based wireless communications system have been identified as requiring to communicate with each other, or are already communicating with each other using D2I links. It is also assumed that the pair of terminals have a potential D2D link over which they can communicate.

The process begins at step S302, with the estimation of at least one metric of energy efficiency for the D2I links between the infrastructure node and each terminal of a pair of terminals and for the D2D link between the pair of terminals. The metrics may be estimated by the terminals and/or the system infrastructure, for example based on measurements on reference symbols and from monitoring ongoing data transmissions. The metrics may take into account data rate, transmission scheme and/or transmit power used. It will be appreciated that the most appropriate method for estimating an energy efficiency metric may depend on what kind of metric is being considered. For example, if the metric considers energy consumed by the system as a whole, or multiple parts of the system, it may be more appropriate to estimate it in the system infrastructure, while if the metric is based on energy used by the terminal this may be easier to estimate at the terminal. It may also depend on which direction of transmission is being considered.

If the metrics satisfy a condition (step S304, YES), the system infrastructure invites the pair of terminals to use a D2D link for communication (step S306). Otherwise, the process ends for the pair of terminals (step S304, NO) and the terminals continue to communicate via the D2I links. The condition may be a simple comparison between the D21 links (individually or in combination) and the D2D link. However, more complex evaluations could be considered. For example, there may be a threshold applied to the difference in energy efficiencies between the D2D link and the D21 links. The invitation may be sent over the D21 links, but need not specifically identify the pair of terminals.

At step S308, each terminal of the pair of terminals decides whether or not to use the D2D link for communication based on factors known to the terminal. Among other things, these factors could include Quality of Signal (QoS) demands such as for transferring data of an application, remaining battery life and/or confidentiality of the data. These may affect the transmission behaviour preferred by the apparatuses, and thus the energy efficiency of the resulting communications. At step S310, the terminals inform the system infrastructure of their decisions. This can be via uplink signalling and, if the decision of both terminals is to use the D2D link (step S312, YES), then at step S316 they switch to the D2D link for communication following a confirmation signal from the system infrastructure (step S314). Otherwise (step S312, NO), the process ends for the pair of terminals. The switch to the D2D link may include a "handshake" or other mechanism between the terminals, for example when the D2D link uses a different communications protocol from that of the D2I links. However, confirmation of the D2D link is not a necessity.

In some embodiments, at step S310 the terminals indicate not only to the network but also to each other whether they intend to engage in a D2D communication. In this embodiment, if both terminals are in agreement, they switch communications to the D2D link without requiring the confirmation signal from the network of step S314.

In some embodiments, the aforementioned factors may also be known to the system infrastructure so that steps S308 and S310 may be performed prior to, or in parallel with, steps S302 and S304. This could allow the system infrastructure to invite the terminals to use the D2D link for communication (step S306) even if the D2D link is less energy efficient.

Tear-down (termination) of an established D2D link may be by agreement among the two terminals, each of which re-establishes its D21 link by suitable signalling. Alternatively, the system infrastructure may request the terminals to tear down the D2D link. In the latter case, complying with the system infrastructure's request may or may not be optional for the terminals. In particular, the D2D link may either operate under the supervision of the system infrastructure or may be used at the discretion of the terminals. For example, if the system infrastructure intends to relinquish control of the D2D link (e.g. to reduce signalling load), then the system infrastructure could request that the link is terminated, but on the understanding that the terminals may continue to use the D2D link at their discretion. In such cases, the D2D link may no longer be "visible" to the system infrastructure.

### Multi-link, negotiable, pairwise D2D link selection

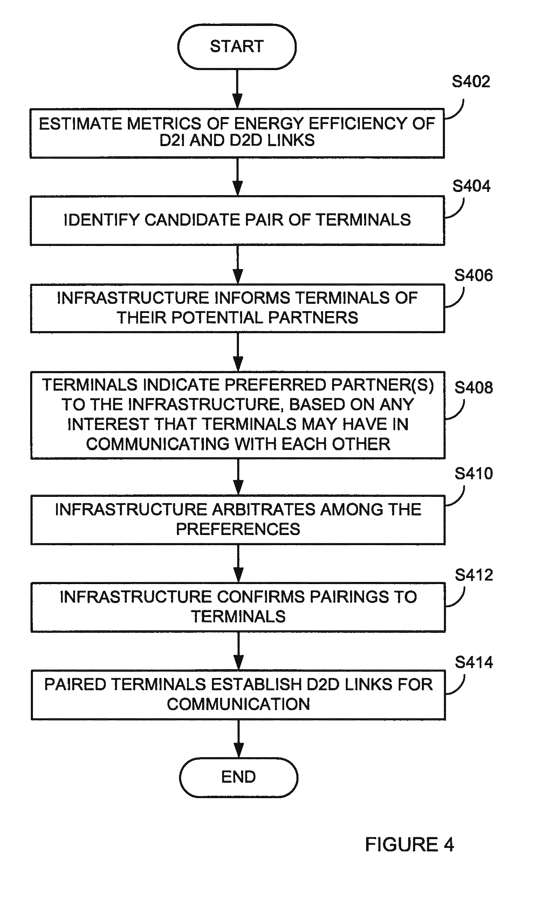

Figure 4 is a flowchart of a multi-link, negotiable, pairwise D2D link selection process according to an embodiment.

This embodiment is similar to the previously described negotiable, pairwise D2D link selection embodiment, except that here the system infrastructure indicates to a given terminal any number of other terminals which the system infrastructure judges to be suitable for communication using a D2D link on the basis of the estimated values. This may be in accordance with information provided by the terminals themselves and/or based on the network observing routing of data between terminals via D21 links.

The process begins at step S402, with an estimation of at least one metric of energy efficiency for D21 links between the system infrastructure and some or all of the terminals associated with the system infrastructure, and of at least one metric of energy efficiency for D2D links between pairs of terminals. The estimations can be performed by the system infrastructure and/or terminals. For example, the metric of energy efficiency for D21 links can be based on channel information between the pairs of terminals as measured by the terminals and reported to the system infrastructure.

At step S404, candidate pairs of terminals are identified based on the estimated metrics. A pair of terminals may be considered as a candidate where the energy metric for communication between the pair of terminals over the D2D link is lower than for communication over the D2I links.

At step S406, the system infrastructure informs the terminals of the candidate pairs. If a terminal determines that communication over a D2D link is appropriate, for example based on one or more of the aforementioned factors such as QoS, it indicates to the system infrastructure a preferred pairing or preferred pairings (step S408). The preference may be based on any interest that terminals may have in communicating with each other, for example to perform a desired data transmission between a data source and a destination. The system infrastructure then arbitrates among the preferences of all of the terminals in order to achieve the most energy efficient configuration for the system (step S410), and at step S412 informs the terminals accordingly. At step S414, the terminals switch to the D2D links for communication. As noted previously, the switch to the D2D link may include a "handshake" or other mechanism between the paired terminals.

### Negotiable, per-terminal D2D link selection

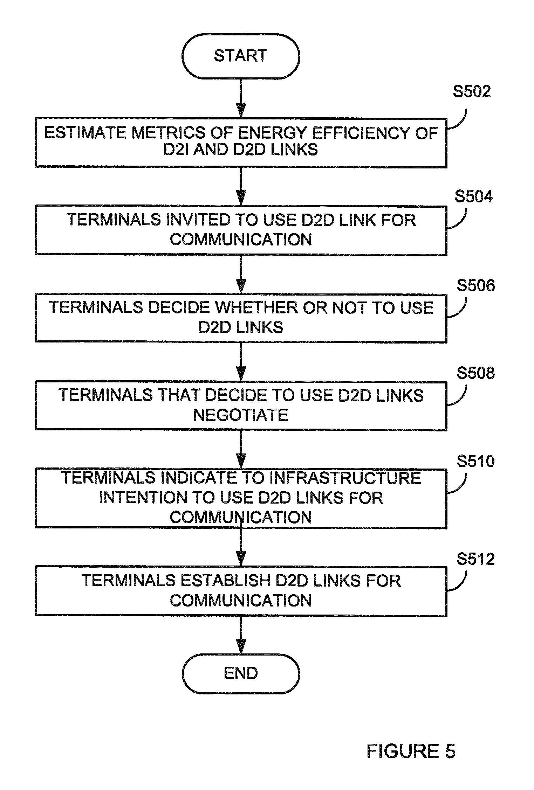

Figure 5 is a flowchart of a negotiable, per-terminal D2D link selection process according to an embodiment.

This embodiment is similar to the previously described negotiable, pairwise D2D link selection embodiment, except that the system infrastructure does not indicate any specific partners with which terminals may form a D2D link. Instead, the system infrastructure only indicates that a particular terminal may use a D2D link. The choice of which D2D link a given terminal establishes is left to negotiation among terminals that, firstly, have received an invitation from the system infrastructure to form a D2D link, and, secondly, have determined that they wish in principle to switch to D2D.

The process begins at step S502, with an estimation of at least one metric of energy efficiency for D21 links between the system infrastructure and some or all of the terminals associated with the system infrastructure, and of at least one metric of energy efficiency for D2D links between pairs of terminals. As in the previously described negotiable, pairwise D2D link selection embodiment, the estimations can be performed by the system infrastructure and/or terminals. If the metrics satisfy a condition the system infrastructure then invites terminals to use D2D links for communication (step S504). As noted earlier, the condition may be based on a comparison, a threshold applied to the difference in energy efficiencies between the D2D link and the D21 links, and/or other factors such as availability of data to transmit. However, in this case the system infrastructure does not specify terminal pairings. Rather, at step S506, terminals decide whether or not to use the D2D link for communication based on further factors known to the terminal, similar to the previously described embodiments. At step S508, terminals that wish to use D2D links negotiate to establish such links. This could be achieved by such terminals advertising their availability for communication over a D2D link, and reaching agreement with another terminal to enter D2D mode, for example by broadcasting their availability over a predetermined radio resource such as a control channel. The agreement could be on the basis of, for example, estimated pathloss between the terminals being within acceptable limits. Once an agreement has been reached, the terminals indicate to the system infrastructure their intention to switch communications to the D2D link between them (step S510). At step S512 terminals establish D2D links.

Tear down of an established D2D link can be achieved in the same manner as in the negotiable, pairwise D2D link selection embodiment.

In some embodiments, the parameters for the negotiation between terminals as to D2D suitability can be provided by the system infrastructure in the invitation to switch to D2D communications.

### Terminal-requested D2D link selection

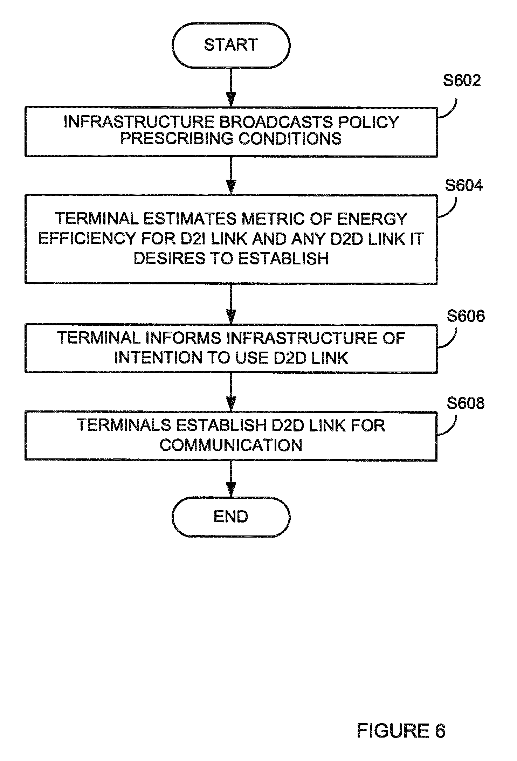

Figure 6 is a flowchart of a terminal-requested D2D link selection process according to an embodiment.

In this embodiment, the energy efficiency metrics for the various links are estimated by the terminals, which determine when to switch in accordance with a policy set by the system infrastructure.

The process begins at step S602, with the system infrastructure broadcasting a policy prescribing conditions, based on energy efficiency considerations, under which terminals may use D2D link communication. At step S604, a terminal estimates an energy efficiency metric for its D21 link and any D2D links it may wish to establish. Which D2D links to consider may either be set by the system infrastructure or may be determined autonomously by the terminal, for example based on being able to detect uplink signalling from (presumed) nearby terminals. When a terminal determines that it should use communications to a D2D link it may, but need not, inform the system infrastructure of its intention to switch (step S606). Then, at step S608, the terminal establishes a D2D link with another terminal and relinquishes its D21 link (though in other embodiments, described in more detail below, the D2I link is maintained).

In some embodiments, where the terminal indicates its intention to use a D2D link for communication (step S606), the system infrastructure may deny permission to do so, even if the policy would otherwise permit the D2D link for communication. This may be needed if the system infrastructure determines that to do so would be detrimental to the system. This may be based on further energy efficiency calculations using information not available to the terminals.

A number of different options are available to the system infrastructure if it wishes to temporarily bar communications over D2D links. Firstly, it can suspend transmission of the broadcast policy. Secondly, it can configure the policy so that the conditions cannot be satisfied. Thirdly, the policy configuration can include an indication that it is temporarily suspended whilst still making available the general parameters of the policy.

In a specific example of this embodiment, in which the system is a cellular communications system compliant with the 3GPP LTE standard and supporting D21 links over LTE, the policy can be broadcast in System Information Blocks (SIBs) or the Master Information Block (MIB). The MIB contains limited information and is transmitted over the broadcast channel (BCH) while the SIBs contain more detailed information and are transmitted over the downlink shared channel (DL-SCH). Alternatively, new specific signalling on the Physical Downlink Control Channel (PDCCH) can be used. Alternatively still, the policy information could be provided by new specifications. Such signalling could be via an extension of an existing channel or by a newly defined channel.

Various modifications can be made to embodiments described herein. Some of these are described below and may be applied to any of the embodiments described herein.

### UUDL split D2D link usage

In one embodiment, terminals are not required to switch their entire communication to the D2D link. For example, energy efficiency metrics are estimated separately for "downlink" and "uplink" communications and the decision on whether to switch to D2D communications is applied separately. For example, the system infrastructure may consider that the D2I links may be used mainly for ACK/NACK and HARQ signalling relating to a data communication from one terminal to another terminal carried out via the D2D link. In this way, the terminal receiving the data over the D2D link does not need to transmit via the same link. The energy efficiency estimation for such signalling may be significantly different from downlink data transmission/reception and splitting the D2D and D2I assignment for the two may improve the overall energy efficiency compared to switching the entire communication. It will be appreciated that splitting the uplink/downlink can be applied jointly to the pair of D2D terminals or to them each individually.

### Control/data split D2D link usage

In one embodiment, terminals are not required to switch even the whole of their uplink or downlink communications to the D2D link. Instead, energy efficiency metrics may be estimated separately for data channels and control signalling, and the decision as to whether to switch to a D2D link can be applied to each separately. For example, the system infrastructure may consider that downlink control signalling to paired terminals via the D21 link is essential to the correct operation of the system and the stability of a D2D link over which terminals are communicating. However, as noted previously, the D2D link may alternatively operate in an unsupervised manner, whereby terminals may reconnect to the network using paging in the downlink or random access in the uplink for example. Again, the energy efficiency estimations may be different for different types of transmissions, resulting in overall improvements in energy efficiency. It will be appreciated that this embodiment can be applied jointly to the pair of D2D terminals or to them each individually.

The skilled reader will appreciate that this embodiment may be combined with any of the previous embodiments, so that downlink is considered separately from uplink and control and data are considered separately, so that there may be multiple D2I link versus D2D link decisions to be made.

### Split resource D2D link usage

In one embodiment, terminals are not required to switch all the resources occupied by a given channel or link to D2D communications. Instead, energy efficiency metrics are estimated over the relevant resource dimensions for the wireless system in use and only resources which pass the metric tests are switchable to D2D mode. In the case of LTE, for example, only certain frequency resources might be eligible for D2D communications. In principle, this could allow even a particular channel (e.g. in LTE, PDCCH, which extends across the system bandwidth) to be split partially on the D21 link and partially on a D2D link.

### Simultaneous D2D and D2I link usage

In one embodiment, a terminal switches communications to a D2D link according to any preceding embodiment. However, the terminal also maintains a D2I link, for example for providing high speed backhaul. Thus, there may be simultaneous data connections on the two links. The energy efficiency metrics can be estimated taking into account the dual operation to establish whether the offloading of the D2D link provides a useful energy saving versus continuing to provide the D2I links. To avoid interference, the D2D and D2I links may be separated in time and/or frequency. However, the D2D link could use at least some of the same resources as could be used by D21 links, without interference, provided the links are not concurrently in use, or they can be spatially separated (e.g. using MIMO techniques).

### Different radio access technologies

In one embodiment, two apparatuses have at least two means to communicate that are distinguished by the technologies used on the links. In this embodiment, the choice of which communication technology to use for communication can be based on the energy efficiency metric of the first embodiment, and communication can switch between arbitrary links supported mutually by the two terminals.

### Summary

To summarise, embodiments enable terminals to select between using one communications path (primarily D21 links) or an alternative communications path (primarily a D2D link) on the basis of the relative energy efficiencies required (or desired) for communications over the links. Some embodiments provide for separation of switching downlink (DL) and uplink (UL) communication separately between the alternate links, and for the system infrastructure to control the switching on the basis of a broadcast policy within, e.g., a cell, or on the basis of a specific order or invitation to a terminal. Furthermore, some embodiments provide means for a terminal to autonomously or semi-autonomously initiate the switch to an alternate communications path, and also for the terminal to negotiate with the network over whether or not it should switch when it receives an order or invitation to do so.

While embodiments have been described in the context of an infrastructure-based system, it will be appreciated that embodiments are also applicable to ad-hoc systems. For example, an apparatus in an ad-hoc system may select one of a plurality of paths (next hops) for routing a communication, if available. The apparatuses may have knowledge of available paths based on information provided by beacons for example.

The flowcharts and block diagrams of the Figures illustrates the architecture, functionality, and operation of possible implementations of apparatuses, methods and computer program products according to various embodiments. In this regard, each block in a flowchart or block diagram may represent a module, segment, or portion of a code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending on the functionality involved. It will also be noted that each block of a block diagram and/or flowchart illustration, and combinations of blocks in a block diagram and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting. While the foregoing description describes several embodiments of the present invention, it will be understood by those skilled in the art that variations and modifications to these embodiments may be made without departing from the scope of the present disclosure as defined by the appended claims and their equivalents. The present invention encompasses all combinations of various embodiments or aspects of the invention described herein. It is understood that any and all embodiments of the present invention may be taken in conjunction with any other embodiment to describe additional embodiments of the present invention. Furthermore, any elements of an embodiment may be combined with any and all other elements of any of the embodiments to describe additional embodiments.

## Claims

1. A method of managing communications in a wireless communications system, comprising:
estimating (S402) at least one metric of energy efficiency associated with communicating over each of a plurality of communications links, said plurality of communications links included in a plurality of communications paths between terminals of the system, said plurality of communications paths comprising direct wireless communications paths between terminals of the system and indirect wireless communications paths between terminals of the system via a base station of the system;
the base station identifying (S404) candidate pairs of terminals based on the estimated metrics of energy efficiency, wherein a pair of terminals is identified as a candidate pair of terminals when the metric of energy efficiency associated with communicating over a communications link included in a direct communications path between the pair of terminals is lower than the metrics of energy efficiency associated with communicating over communications links included in an indirect communications path between the pair of terminals;
the base station informing (S406) the terminals of the identified candidate pairs;
at least one of the terminals of each identified candidate pair indicating (S408), to the base station, a preference among the identified candidate pairs;
the base station arbitrating (S410) among the preferences to decide pairs of terminals that are to communicate over direct wireless communications paths, in order to achieve the most energy efficient configuration for the wireless communications system, based on the estimated metrics of energy efficiency; and
the base station informing (S412) the terminals of the decided pairs of terminals.

2. A method according to claim 1, wherein the estimated metrics of energy efficiency comprise at least one metric of energy efficiency estimated by a first terminal and at least one metric of energy efficiency estimated by a second terminal.

3. A method according to claim 1 or 2, wherein said metric of energy efficiency is separately estimated for one or more of: each direction of the communications links, control and data communications, and different radio resources.

4. A method according to any one of the preceding claims, wherein communication carried out over the direct wireless communications path uses a different radio access technology from communication carried out over the indirect wireless communications path.

5. A method according to any one of the preceding claims, wherein when communications are being carried out over direct wireless communications paths, the method further comprising switching communications to indirect wireless communications paths.

6. A base station (800) for use in a wireless communications system, comprising:
means (804) for estimating at least one metric of energy efficiency associated with communicating over each of a plurality of communications links, said plurality of communications links included in a plurality of communications paths between terminals of the system, said plurality of communications paths comprising direct wireless communications paths between terminals and indirect wireless communications paths between terminals via the base station (800),
means (806) for identifying candidate pairs of terminals based on the estimated metrics of energy efficiency, wherein a pair of terminals is identified as a candidate pair of terminals when the metric of energy efficiency associated with communicating over a communications link included in a direct communications path between the pair of terminals is lower than the metrics of energy efficiency associated with communicating over communications links included in an indirect communications path between the pair of terminals;
means (801) for informing the terminals of the identified candidate pairs;
means (801) for receiving, from at least one of the terminals of each identified candidate pair indicating, a preference among the identified candidate pairs;
means (806) for arbitrating among the preferences to decide pairs of terminals that are to communicate over direct wireless communications paths, in order to achieve the most energy efficient configuration for the wireless communications system, based on the estimated metrics of energy efficiency; and
means (801) for informing the terminals of the decided pairs of terminals.

7. A wireless communications system comprising a plurality of terminals and a base station in accordance with claim 6.

## Patentansprüche

1. Verfahren zum Managen von Kommunikation in einem drahtlosen Kommunikationssystem, umfassend:
Schätzen (S402) mindestens eines Wertes der Energieeffizienz, die dem Kommunizieren über jede von mehreren Kommunikationsverbindungen zugeordnet ist, wobei die mehreren Kommunikationsverbindungen in mehreren Kommunikationswegen zwischen Endpunkten des Systems enthalten sind, wobei die mehreren Kommunikationswege direkte drahtlose Kommunikationswege zwischen Endpunkten des Systems und indirekte drahtlose Kommunikationswege zwischen Endpunkten des Systems über eine Basisstation des Systems umfassen,
Identifizieren (S404) von Kandidatenpaaren von Endpunkten durch die Basisstation basierend auf den geschätzten Werten der Energieeffizienz, wobei ein Paar von Endpunkten als Kandidatenpaar von Endpunkten identifiziert wird, wenn der Wert der Energieeffizienz, der dem Kommunizieren über eine Kommunikationsverbindung zugeordnet ist, die in einem direkten Kommunikationsweg zwischen dem Paar von Endpunkten enthalten ist, geringer ist als die Werte der Energieeffizienz, die dem Kommunizieren über Kommunikationsverbindungen zugeordnet sind, die in einem indirekten Kommunikationsweg zwischen dem Paar von Endpunkten enthalten sind,
Informieren (S406) der Endpunkte der identifizierten Kandidatenpaare durch die Basisstation, Angeben (S408) einer Präferenz unter den identifizierten Kandidatenpaaren gegenüber der Basisstation durch mindestens einen der Endpunkte jedes identifizierten Kandidatenpaars,
Vermitteln (S410) zwischen den Präferenzen durch die Basisstation, um Paare von Endpunkten auszuwählen, die über direkte drahtlose Kommunikationswege kommunizieren sollen, um die energieeffizienteste Konfiguration für das drahtlose Kommunikationssystem zu erreichen, basierend auf den geschätzten Werten der Energieeffizienz, und
Informieren (S412) der Endpunkte der ausgewählten Paare von Endpunkten durch die Basisstation.

2. Verfahren nach Anspruch 1, wobei die geschätzten Werte der Energieeffizienz mindestens einen Wert der Energieeffizienz umfassen, der durch einen ersten Endpunkt geschätzt wird, und mindestens einen Wert der Energieeffizienz, der durch einen zweiten Endpunkt geschätzt wird.

3. Verfahren nach Anspruch 1 oder 2, wobei der Wert der Energieeffizienz separat für eines oder mehrere der Folgenden geschätzt wird: jede Richtung der Kommunikationsverbindungen, Steuerungs- und Datenkommunikation und verschiedene Funkressourcen.

4. Verfahren nach einem der vorhergehenden Ansprüche, wobei die Kommunikation, die über den direkten drahtlosen Kommunikationsweg erfolgt, eine andere Funkzugangstechnologie nutzt als die Kommunikation, die über den indirekten drahtlosen Kommunikationsweg erfolgt.

5. Verfahren nach einem der vorhergehenden Ansprüche, wobei, wenn die Kommunikation über direkte drahtlose Kommunikationswege erfolgt, das Verfahren ferner das Umschalten der Kommunikation auf indirekte drahtlose Kommunikationswege umfasst.

6. Basisstation (800) zur Nutzung in einem drahtlosen Kommunikationssystem, umfassend:
Mittel (804) zum Schätzen mindestens eines Wertes der Energieeffizienz, der dem Kommunizieren über jede von mehreren Kommunikationsverbindungen zugeordnet ist, wobei die mehreren Kommunikationsverbindungen in mehreren Kommunikationswegen zwischen Endpunkten des Systems enthalten sind, wobei die mehreren Kommunikationswege direkte drahtlose Kommunikationswege zwischen Endpunkten des Systems und indirekte drahtlose Kommunikationswege zwischen Endpunkten des Systems über die Basisstation (800) umfassen,
Mittel (806) zum Identifizieren von Kandidatenpaaren von Endpunkten basierend auf den geschätzten Werten der Energieeffizienz, wobei ein Paar von Endpunkten als Kandidatenpaar von Endpunkten identifiziert wird, wenn der Wert der Energieeffizienz, der dem Kommunizieren über eine Kommunikationsverbindung zugeordnet ist, die in einem direkten Kommunikationsweg zwischen dem Paar von Endpunkten enthalten ist, geringer ist als die Werte der Energieeffizienz, die dem Kommunizieren über Kommunikationsverbindungen zugeordnet sind, die in einem indirekten Kommunikationsweg zwischen dem Paar von Endpunkten enthalten sind,
Mittel (801) zum Informieren der Endpunkte der identifizierten Kandidatenpaare,
Mittel (801) zum Empfangen einer Präferenz unter den identifizierten Kandidatenpaaren von mindestens einem der Endpunkte jedes identifizierten Kandidatenpaars, Mittel (806) zum Vermitteln zwischen den Präferenzen, um Paare von Endpunkten auszuwählen, die über direkte drahtlose Kommunikationswege kommunizieren sollen, um die energieeffizienteste Konfiguration für das drahtlose Kommunikationssystem zu erreichen, basierend auf den geschätzten Werten der Energieeffizienz, und
Mittel (801) zum Informieren der Endpunkte der ausgewählten Paare von Endpunkten.

7. Drahtloses Kommunikationssystem, das mehrere Endpunkte und eine Basisstation nach Anspruch 6 umfasst.

## Revendications

1. Procédé de gestion de communications dans un système de communications sans fil, comprenant :
l'estimation (S402) d'au moins une métrique d'efficacité énergétique associée à la communication sur chacune d'une pluralité de liaisons de communications, ladite pluralité de liaisons de communications incluse dans une pluralité de trajets de communications entre des terminaux du système, ladite pluralité de trajets de communications comprenant des trajets de communications sans fil directs entre des terminaux du système et des trajets de communications sans fil indirects entre des terminaux du système via une station de base du système ;
la station de base identifiant (S404) des paires de terminaux candidates sur la base des métriques d'efficacité énergétique estimées, où une paire de terminaux est identifiée comme une paire de terminaux candidate lorsque la métrique d'efficacité énergétique associée à la communication sur une liaison de communications incluse dans un trajet de communications direct entre la paire de terminaux est inférieure à la métrique d'efficacité énergétique associée à la communication sur des liaisons de communications incluses dans un trajet de communications indirect entre la paire de terminaux ;
la station de base informant (S406) les terminaux des paires candidates identifiées ;
au moins un des terminaux de chaque paire candidate identifiée indiquant (S408), à la station de base, une préférence parmi les paires candidates identifiées ;
la station de base arbitrant (S410) parmi les préférences pour décider des paires de terminaux qui doivent communiquer sur des trajets de communications sans fil directs, afin de parvenir à la configuration la plus efficace sur le plan énergétique pour le système de communications sans fil, sur la base des métriques d'efficacité énergétique estimées ; et
la station de base informant (S412) les terminaux des paires de terminaux décidées.

2. Procédé selon la revendication 1, dans lequel les métriques d'efficacité énergétique estimées comprennent au moins une métrique d'efficacité énergétique estimée par un premier terminal et au moins une métrique d'efficacité énergétique estimée par un second terminal.

3. Procédé selon la revendication 1 ou 2, dans lequel ladite métrique d'efficacité énergétique est estimée séparément pour une ou plusieurs parmi : chaque direction des liaisons de communications, des communications de contrôle et de données, et des ressources radio différentes.

4. Procédé selon l'une quelconque des revendications précédentes, dans lequel une communication effectuée sur le trajet de communications sans fil direct utilise une technologie d'accès radio différente d'une communication effectuée sur le trajet de communications sans fil indirect.

5. Procédé selon l'une quelconque des revendications précédentes, dans lequel lorsque des communications sont effectuées sur des trajets de communications sans fil directs, le procédé comprenant en outre la commutation de communications vers des trajets de communications sans fil indirects.

6. Station de base (800) destinée à être utilisée dans un système de communications sans fil, comprenant :
des moyens (804) pour estimer au moins une métrique d'efficacité énergétique associée à la communication sur chacune d'une pluralité de liaisons de communications, ladite pluralité de liaisons de communications incluse dans une pluralité de trajets de communications entre des terminaux du système, ladite pluralité de trajets de communications comprenant des trajets de communications sans fil directs entre des terminaux et des trajets de communications sans fil indirects entre des terminaux via la station de base (800),
des moyens (806) pour identifier des paires de terminaux candidates sur la base des métriques d'efficacité énergétique estimées, où une paire de terminaux est identifiée comme une paire de terminaux candidate lorsque la métrique d'efficacité énergétique associée à la communication sur une liaison de communications incluse dans un trajet de communications direct entre la paire de terminaux est inférieure à la métrique d'efficacité énergétique associée à la communication sur des liaisons de communications incluses dans un trajet de communications indirect entre la paire de terminaux ;
des moyens (801) pour informer les terminaux des paires candidates identifiées ;
des moyens (801) pour recevoir, en provenance d'au moins un des terminaux de chaque paire candidate identifiée indiquant, une préférence parmi les paires candidates identifiées ;
des moyens (806) pour arbitrer parmi les préférences pour décider des paires de terminaux qui doivent communiquer sur des trajets de communications sans fil directs, afin de parvenir à la configuration la plus efficace sur le plan énergétique pour le système de communications sans fil, sur la base des métriques d'efficacité énergétique estimées ; et
des moyens (801) pour informer les terminaux des paires de terminaux décidées.

7. Système de communications sans fil comprenant une pluralité de terminaux et une station de base conformément à la revendication 6.
